# EUROPÄISCHE PATENTSCHRIFT

(11) **EP 2 166 878 B1**
(45) Veröffentlichungstag und Bekanntmachung des Hinweises auf die Patenterteilung: **06.08.2014**
(21) Anmeldenummer: 08759222.6
(22) Anmeldetag: 13.06.2008
(51) Int. Cl.: B01D 11/02, A23L 1/221, A23J 7/00, C11B 1/10, A23L 1/275, A23L 1/325

(54) **NATURSTOFFEXTRAKTION**
NATURAL PRODUCT EXTRACTION
EXTRACTION DE SUBSTANCES NATURELLES

(30) Priorität: 20.07.2007 DE 102007033907
(43) Veröffentlichungstag der Anmeldung: 31.03.2010
(73) Patentinhaber: Uhde High Pressure Technologies GmbH, 58093 Hagen (DE)
(72) Erfinder: DIERKES, Heribert, 58093 Hagen (DE); STEINHAGEN, Volkmar, 58097 Hagen (DE); BORK, Michael, 44329 Dortmund (DE); LÜTGE, Christoph, 59425 Unna (DE); KNEZ, Zeljko, 2000 Maribor (SI)
(74) Vertreter: Meinke, Dabringhaus und Partner GbR
(86) Internationale Anmeldenummer: PCT/EP2008/004752
(87) Internationale Veröffentlichungsnummer: WO 2009/012852

(56) Entgegenhaltungen:
- WO-A-2004/017768
- WO-A-2007/091901
- DE-A1- 4 433 274
- DE-A1- 4 440 644
- DE-A1- 10 322 564
- M.H. GNAYFEED ET AL.: "Supercritical CO2 and Subcritical Propane Extraction of Pungent Paprika and Quantification of Carotenoids, Tocopherols and Capsaicinoids" JOURNAL OF AGRICULTURAL AND FOOD CHEMISTRY., Bd. 49, Nr. 6, 2001, Seiten 2761-2766, XP002513116 USAMERICAN CHEMICAL SOCIETY. WASHINGTON.
- DATABASE WPI Week 199238 Thomson Scientific, London, GB; AN 1992-311149 XP002513117 & JP 04 214799 A (HASEGAWA CO LTD) 5. August 1992 (1992-08-05)

## Beschreibung

Die Erfindung richtet sich auf ein Verfahren zur Extraktion von Wertstoffen aus tierischem oder pflanzlichem Ausgangsmaterial der im Oberbegriff des Anspruches 1 angegebenen Gattung, wie es z.B. in der DE 103 22 564 A1 beschrieben ist. Weitere Extraktionsverfahren sind aus der DE 44 33 274 A1 oder der DE 44 40 644 A1 bekannt.

Eine Hochdruck-Extraktion ist eine Möglichkeit, Produkte aus tierischem oder pflanzlichem Material zu gewinnen, insbesondere mit dem Ziel, die Umwelt zu schonen und Energie zu sparen. Zum Stand der Technik zählt beispielsweise die WO 2007/017106-A1, die ein Verfahren zur Gewinnung von natürlichen Ölen aus pflanzlichen Bestandteilen betrifft, oder die WO 2007/017105-A2, die die Extraktion von Fruchtwachsen beschreibt, oder beispielsweise die DE-102 00 226-A1, die eine Hochdruck-Spülextraktion zum Inhalt hat. Zweistufige Extraktionsverfahren sind z.B. in der DE 31 14 593 C1 oder der EP 0 711 508 A1 beschrieben.

Zeigen die Verfahrensweisen nach dem Stand der Technik bereits zum Teil gute Ergebnisse, so hat sich gezeigt, dass die Extraktion und Abscheidung besonderer Substanzen nicht immer befriedigend möglich ist, so dass die Aufgabe der vorliegenden Erfindung darin besteht, die Extraktion sowohl was die Ausbeute und die Trennung zu extrahierender Naturstoffe als auch die Verfahrensführung betrifft, zu verbessern.

Mit einem Verfahren der Eingangs bezeichneten Art wird diese Aufgabe gemäß der Erfindung dadurch gelöst, dass aus dem Ausgangsmaterial in einem ersten Extraktionsschritt mit Hilfe von CO₂ lösliche Inhaltsstoffe extrahiert werden und nachfolgend in einem zweiten Extraktionsschritt weitere Inhaltsstoffe mit verdichteten Kohlenwasserstoffen extrahiert werden, wobei bei dem ersten Extraktionsschritt eine Mischung aus CO₂ und polarem Schleppmittel (Wasser, Alkohole, Ketone oder Mischungen) eingesetzt wird.

Es hat sich gezeigt, dass die zweistufige Extraktion zunächst mit CO₂ und nachfolgend mit verdichteten Kohlenwasserstoffen zu optimalen Ergebnissen führt.

Ausgestaltungen der Erfindung ergeben sich aus den Unteransprüchen.

Der zweite Extraktionsschritt kann dabei erfindungsgemäß beispielsweise mit Fluorkohlenwasserstoffen oder Chlorkohlenwasserstoffen als Extraktionsmittel durchgeführt werden, es können aber auch hier Mischungen aus CO₂ und Kohlenwasserstoffen eingesetzt werden, wie dies die Erfindung in weiterer Ausgestaltung ebenfalls vorsieht.

Auch im zweiten Extraktionsschritt können als Extraktionsmittel Mischungen aus CO₂ und polarem Schleppmittel, etwa Wasser, Alkohole, Ketone oder Mischungen daraus, eingesetzt werden.

Eine weitere Ausgestaltung der erfindungsgemäßen Verfahrensweise besteht darin, dass der erste Extraktionsschritt und/oder der zweite Extraktionsschritt je in mehreren Stufen durchgeführt wird/werden und die fraktionierende Abscheidung aufgrund unterschiedlicher Drücke oder unterschiedlicher Temperaturen in den einzelnen Stufen durchgeführt wird.

Vorteilhaft kann es sein, wenn die Abscheidung der einzelnen Lösungsmittel und Schleppmittel durch Destillation oder Rektifikation erfolgt und/oder mit Hilfe einer Membran durchgeführt wird. Die Trennung der Extraktionsextrakte von den Schleppmitteln kann beispielsweise in einer dafür vorgesehenen speziellen Einrichtung innerhalb des Verfahrens durchgeführt werden.

Eine weitere Ausgestaltung der Erfindung besteht darin, dass als Ausgangsmaterial Produkte der Meeresfauna oder der Meeresflora eingesetzt werden, wobei die Erfindung nicht auf dieses Einsatzgebiet beschränkt ist, wie die nachfolgenden Beispiele belegen:

### Beispiel 1:

0, 5 kg Mehl von Meeresfrüchten wurde in den Extraktor gefüllt und bei 850 bar und 60°C mit reinem CO₂ bis zum Verhältnis des Lösungsmittels mit dem Rohstoff von 15 kg/kg extrahiert. In dem bei 40 bar und 40°C betriebenen Abscheider wurden leichtes rotes Öl und Wasser aufgefangen. Die Ausbeute dieser Extraktionsstufe (CO₂) betrug 8 bis 10 % je nach Quelle des Fischmehls.

Im nachfolgenden Schritt der Extraktion mit Propan wurden Phospholipide extrahiert und aufgefangen. Die Extraktion wurde bei 150 bar und 60°C durchgeführt, wobei das Verhältnis des Lösungsmittels zum Rohstoff 2,8 kg Propan/kg Rohstoff betrug. Die Ausbeute der Propanextraktion hängt vom Gehalt dieser Inhaltsstoffe in den Ausgangsmaterialien ab und beträgt normalerweise zwischen 2 bis 4 % (w/w).

### Beispiel 2:

0,5 kg Sojamehl wurde in den Extraktor eingefüllt und bei 150 bar und 60°C mit reinem Propan bis zu einem Verhältnis von Lösungsmittel zu Rohstoff von 12 kg/kg extrahiert. In einem bei 40 bar und 40°C betriebenen Abscheider wurde Öl aufgefangen. Das Öl enthält kein Wasser. Die Extraktionskinetik zeigte, dass ein Verhältnis des Lösungsmittels zum Rohstoff von mindestens 12 kg/kg notwendig ist, um die höchsten Ausbeuten zu erzielen (ca. 14 % w/w).

### Beispiel 3:

0,5 kg Sojamehl wurde in den Extraktor eingefüllt und bei 1000 bar und 80°C mit reinem CO₂ bis zu einem Verhältnis von Lösungsmittel zu Rohstoff von 40 kg/kg extrahiert. In einem bei 40 bar und 40°C betriebenen Abscheider wurden Öl und Wasser gesammelt. Der Ertrag dieses Extraktionsschrittes (CO₂) betrug ca. 17 % je nach Quelle des Sojamehls.

Im nachfolgenden Schritt einer Extraktion mit Propan wurden Phospholipide extrahiert und abgeschieden. Die Extraktion wurde bei 150 bar und 60°C durchgeführt, wobei das Verhältnis des Lösungsmittels zum Rohstoff 4,4 kg Propan/kg Rohstoff betrug. Die Ausbeute der Propanextraktion hängt von dem Gehalt dieser Inhaltsstoffe in den Ausgangsmaterialien ab und beträgt normalerweise 10 % (w/w).

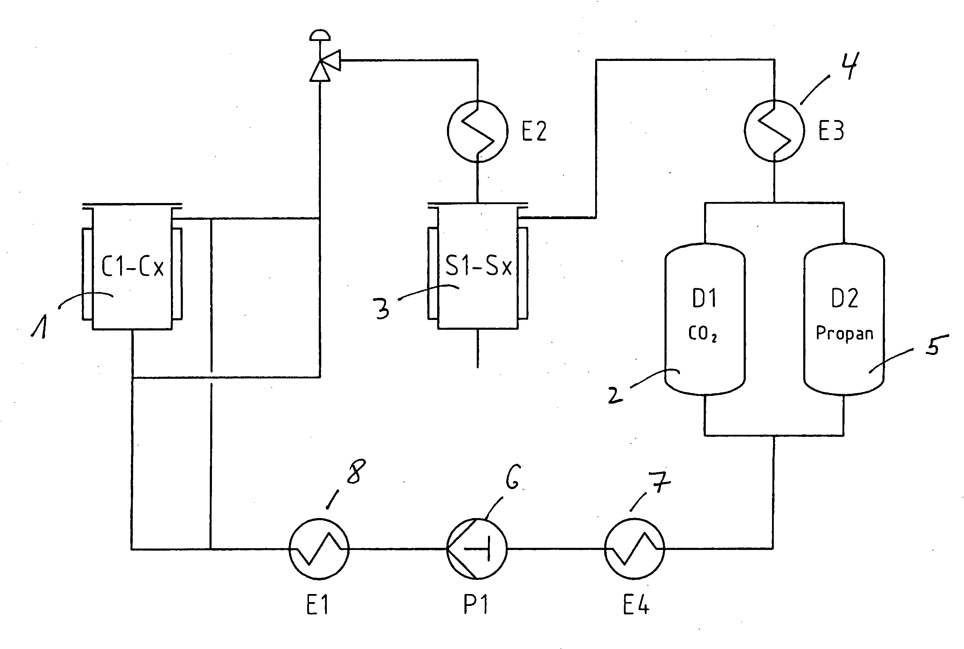

Weitere Merkmale, Einzelheiten und Vorteile der Erfindung ergeben sich aufgrund der nachfolgenden Beschreibung sowie anhand der Zeichnung. Diese zeigt in der einzigen Figur schematisch die erfindungsgemäße Verfahrensweise als Fließbild.

In einen oder mehreren Extraktoren, allgemein mit 1 bezeichnet, wird das zu behandelnde Produkt, z.B. pulverförmige oder pelletierte Feststoffe, eingebracht und zunächst mittels CO₂ aus einem ersten Vorlagebehälter 2 beaufschlagt. Das im Gas enthaltende Extraktionsprodukt wird einem Separator, allgemein mit 3 bezeichnet, zugeführt und dort getrennt. Das CO₂ wird zurückgewonnen und über einen Wärmetauscher 4 dem Vorlagebehälter 2 wieder zugeführt.

Im zweiten Verfahrensschritt wird aus einem Vorlagebehälter 5 Propan dem Extraktor oder mehreren Extraktoren 1 zugeführt, um eine weitere Extraktion vorzunehmen. Die jeweilige Förderung der Extraktionsmittel geschieht über wenigstens eine Pumpe 6 unter Beaufschlagung von weiteren Wärmetauschern 7 und 8.

Das vorliegende Schaubild stellt nur ein Beispiel dar und ist stark vereinfacht. Wie schon erwähnt, können mehrere Extraktionsbehälter vorgesehen sein, auch mehrere Separatoren, je nach eingesetztem Produkt und je nach gewünschten, zu extrahierenden Wertstoffen.

## Patentansprüche

1. Verfahren zur Extraktion von Wertstoffen aus tierischem oder pflanzlichem Ausgangsmaterial,
**dadurch gekennzeichnet,**
**dass** aus dem Ausgangsmaterial in einem ersten Extraktionsschritt mit Hilfe von CO₂ lösliche Inhaltsstoffe extrahiert werden und nachfolgend in einem zweiten Extraktionsschritt weitere Inhaltsstoffe mit verdichteten Kohlenwasserstoffen extrahiert werden, wobei bei dem ersten Extraktionsschritt eine Mischung aus CO₂ und polarem Schleppmittel (Wasser, Alkohole, Ketone oder Mischungen) eingesetzt wird.

2. Verfahren nach Anspruch 1,
**dadurch gekennzeichnet,**
**dass** bei dem zweiten Extraktionsschritt Fluorkohlenwasserstoffe oder Chlorkohlenwasserstoffe als Extraktionsmittel eingesetzt werden.

3. Verfahren nach Anspruch 1 oder 2,
**dadurch gekennzeichnet,**
**dass** als Extraktionsmittel im zweiten Extraktionsschritt eine Mischung aus CO₂ und Kohlenwasserstoffen eingesetzt wird.

4. Verfahren zur Extraktion von Wertstoffen aus tierischen
oder pflanzlichem Ausgangsmaterial, insbesondere nach Anspruch 1 oder 2,
**dadurch gekennzeichnet,**
**dass** als Extraktionsmittel im zweiten Extraktionsschritt eine Mischung aus CO₂ und polarem Schleppmittel (Wasser, Alkohole, Ketone oder Mischungen) eingesetzt wird.

5. Verfahren nach einem der vorangehenden Ansprüche,
**dadurch gekennzeichnet,**
**dass** der erste Extraktionsschritt und/oder der zweite Extraktionsschritt je in mehreren Stufen durchgeführt wird/ werden und die fraktionierende Abscheidung aufgrund unterschiedlicher Drücke oder unterschiedlicher Temperaturen in den einzelnen Stufen durchgeführt wird.

6. Verfahren nach einem der vorangehenden Ansprüche,
**dadurch gekennzeichnet,**
**dass** die Abscheidung der einzelnen Lösungsmittel und Schleppmittel durch Destillation oder Rektifikation erfolgt und/oder mit Hilfe einer Membran durchgeführt wird.

7. Verfahren nach einem der vorangehenden Ansprüche,
**dadurch gekennzeichnet,**
**dass** an wenigstens einer Einrichtung eine Trennung der Extrakte von den Schleppmitteln erfolgt.

8. Verfahren nach einem der vorangehenden Ansprüche,
**dadurch gekennzeichnet,**
**dass** als Ausgangsmaterial Produkte der Meeresfauna oder Meeresflora eingesetzt werden.

## Claims

1. Method for extracting valuable substances from an animal- or plant-based starting material, **characterised in that** soluble ingredients are extracted by means of CO₂ in a first extraction step, and subsequently additional ingredients are extracted by means of condensed hydrocarbons in a second extraction step, a mixture of CO₂ and polar entrainer (water, alcohols, ketones or mixtures) being used in the first extraction step.

2. Method according to claim 1, **characterised in that** fluorinated hydrocarbons or chlorinated hydrocarbons are used as an extraction means in the second extraction step.

3. Method according to either claim 1 or claim 2, **characterised in that** a mixture of CO₂ and hydrocarbons is used as an extraction means in the second extraction step.

4. Method for extracting valuable substances from an animal- or plant-based starting material, in particular according to either claim 1 or claim 2, **characterised in that** a mixture of CO₂ and polar entrainer (water, alcohols, ketones or mixtures) is used as an extraction means in the second extraction step.

5. Method according to any of the preceding claims, **characterised in that** the first extraction step and/or the second extraction step is/are carried out in a plurality of stages, and the fractional precipitation is carried out in the individual stages owing to different pressures or different temperatures.

6. Method according to any of the preceding claims, **characterised in that** the precipitation of the individual solvents and entrainers is carried out by means of distillation or rectification and/or by means of a membrane.

7. Method according to any of the preceding claims, **characterised in that** a separation of the extracts from the entrainers takes place on at least one device.

8. Method according to any of the preceding claims, **characterised in that** products of marine fauna or marine flora are used as the starting material.

## Revendications

1. Procédé d'extraction de substances à partir d'une matière première animale ou végétale, **caractérisé en ce que**, à partir de la matière première, on extrait des composants solubles dans une première étape d'extraction à l'aide de CO₂ puis on extrait d'autres composants dans une seconde étape d'extraction à l'aide d'hydrocarbures comprimés, un mélange de CO₂ et d'entraîneur polaire (eau, alcool, cétone ou mélanges de ceux-ci) étant utilisé lors de la première étape d'extraction.

2. Procédé selon la revendication 1, **caractérisé en ce que**, dans la seconde étape d'extraction, on utilise des hydrocarbures fluorés ou des hydrocarbures chlorés comme agent d'extraction.

3. Procédé selon la revendication 1 ou 2, **caractérisé en ce que**, dans la seconde étape d'extraction, on utilise un mélange de CO₂ et d'hydrocarbures comme agent d'extraction.

4. Procédé d'extraction de substances à partir d'une matière première animale ou végétale, notamment selon la revendication 1 ou 2, **caractérisé en ce que**, dans la seconde étape d'extraction, on utilise un mélange de CO₂ et d'entraîneur polaire (eau, alcool, cétone ou mélanges de ceux-ci) comme agent d'extraction.

5. Procédé selon l'une des revendications précédentes, **caractérisé en ce que** l'on effectue la première étape d'extraction et/ou la seconde étape d'extraction à chaque fois en plusieurs étapes et **en ce que**, dans ces différentes étapes, l'on effectue la précipitation fractionnée à différentes pressions ou à différentes températures.

6. Procédé selon l'une des revendications précédentes, **caractérisé en ce que** l'on effectue la précipitation des différents solvants et entraîneurs par distillation ou rectification et/ou à l'aide d'une membrane.

7. Procédé selon l'une des revendications précédentes, **caractérisé en ce que** les extraits sont séparés des entraîneurs au niveau d'au moins un dispositif.

8. Procédé selon l'une des revendications précédentes, **caractérisé en ce que** l'on utilise comme matière première des produits de la faune aquatique ou de la flore aquatique.
